# EUROPÄISCHE PATENTSCHRIFT

(11) **EP 1 919 992 B1**
(45) Veröffentlichungstag und Bekanntmachung des Hinweises auf die Patenterteilung: **24.02.2010**
(21) Anmeldenummer: 06792830.9
(22) Anmeldetag: 16.08.2006
(51) Int. Cl.: C08J 9/42

(54) **OFFENZELLIGER SCHAUMSTOFF MIT BRANDHEMMENDEN UND OLEOPHOBEN/HYDROPHOBEN EIGENSCHAFTEN UND VERFAHREN ZU SEINER HERSTELLUNG**
OPEN-CELL FOAM HAVING FIRE-RETARDANT AND OLEOPHOBIC/HYDROPHOBIC PROPERTIES AND METHOD FOR PRODUCING THE SAME
PRODUIT ALVEOLAIRE A CELLULES OUVERTES PRESENTANT DES PROPRIETES IGNIFUGEANTES ET OLEOPHOBES/HYDROPHOBES, ET SON PROCEDE DE PRODUCTION

(30) Priorität: 22.08.2005 DE 102005039625
(43) Veröffentlichungstag der Anmeldung: 14.05.2008
(73) Patentinhaber: BASF SE, 67056 Ludwigshafen (DE)
(72) Erfinder: BAUMGARTL, Horst, 67056 Mainz (DE); LENZ, Werner, 67059 Ludwigshafen (DE); VATH, Bernhard, 68259 Mannheim (DE)
(86) Internationale Anmeldenummer: PCT/EP2006/065343
(87) Internationale Veröffentlichungsnummer: WO 2007/023118

(56) Entgegenhaltungen:
- EP-A1- 0 633 283
- DE-A1- 3 732 203
- DE-A1- 4 206 411
- US-A- 4 128 512
- US-B1- 6 607 817

## Beschreibung

Die Erfindung betrifft einen Schaumstoff aus einer Schaumstoffmatrix mit im Wesentlichen offenen Zellen und mit einer auf die Schaumstoffmatrix aufgetragenen Imprägnierung aus im Wesentlichen Fluorcarbonharz und/oder Silikonharz, der verbesserte brandhemmende Eigenschaften aufweist. Weiterhin betrifft die Erfindung ein Verfahren zur Herstellung eines solchen Schaumstoffes.

Offenzellige Schaumstoffe aus unterschiedlichen Materialien finden zum Beispiel Anwendung in der Wärme- oder Schalldämmung von Gebäuden und Fahrzeugen. Weiterhin werden offenzellige Schaumstoffe zur akustischen und thermischen Isolierung von Anlagen und Anlagenteilen im Maschinenbau eingesetzt.

Damit sich der Schaumstoff nicht mit Wasser oder Öl vollsaugt, ist aus DE-A 100 11 388 bekannt, einen Melaminharz-Schaum durch Beschichtung des Schaumskelettes mit einer hydrophoben Komponente, zum Beispiel einem Fluoralkylester hydrophob und oleophob auszurüsten.

Ein Verfahren, mit dem sich ein Melaminharz-Schaumstoff imprägnieren lässt, ist zum Beispiel aus EP-A 0 451 535 bekannt. Hierzu wird zunächst ein Bindemittel auf die Oberfläche des Melaminharz-Schaumstoffes aufgetragen und dieser anschließend mit dem Bindemittel durch einen Walzenspalt zweier sich gegensinnig bewegenden Walzen geführt, wobei der Walzenspalt kleiner eingestellt ist, als die unbeeinflusste Dicke des Melaminharz-Schaumstoffes. Dem Bindemittel kann ein Zusatz zur oleophoben und/oder hydrophoben Einstellung zugegeben sein. Eine Imprägnierung, die zu einer Verbesserung der brandhemmenden Eigenschaften führt, ist aus EP-A 0 451 535 nicht bekannt.

DE 42 06 411 A1 beschreibt ein Verfahren zur Herstellung eines Schaumstoffs, in dem ein Polyurethan-Schaumstoff mit einer Dispersion enthaltend ein Melaminharz ein Flammschutzmittel und ein Fluorcarbonharz getränkt, gepresst und getrocknet wird.

Aufgabe der vorliegenden Erfindung ist es, einen offenzelligen Schaumstoff mit hydrophober und/oder oleophober Ausrüstung bereitzustellen, der verbesserte brandhemmende Eigenschaften aufweist.

Gelöst wird die Aufgabe durch einen Schaumstoff aus einer Schaumstoffmatrix mit im Wesentlichen offenen Zellen und mit einer auf die Schaumstoffmatrix aufgetragenen Imprägnierung aus im Wesentlichen Fluorcarbonharz und/oder Silikonharz, wobei die Imprägnierung zusätzlich mindestens eine brandhemmende Substanz enthält, dadurch gekennzeichnet, dass die brandhemmende Substanz ausgewählt ist aus Silikaten, Boraten, Hydroxiden und Phosphaten der Metalle der I. bis III. Hauptgruppe, des Zinks und des Ammoniums.

Geeignete Schaumstoffe im Rahmen der vorliegenden Erfindung sind zum Beispiel solche, bei denen die Schaumstoffmatrix aus einem Melamin/Formaldehyd-Polykondensat aufgebaut ist. Weitere geeignete Schaumstoffe sind solche, bei denen die Schaumstoffmatrix ein Harnstoff/Formaldehyd-Polykondensat ist und solche, bei denen die Schaumstoffmatrix ein offenzelliger Polyurethanschaumstoff ist. Bevorzugt ist die Schaumstoffmatrix aus einem Melamin/Formaldehyd-Polykondensat aufgebaut.

Bei einem besonders bevorzugten Melamin/Formaldehyd-Polykohdensat beträgt das Verhältnis von Melamin zu Formaldehyd zur Herstellung der Schaumstoffmatrix 1 : 1,2 bis 1:4.

Solche Melamin/Formaldehyd-Schaumstoffe sind zum Beispiel aus EP-B 0 071 672 bekannt. Demnach werden die Schaumstoffe hergestellt durch Verschäumen einer wässrigen Lösung eines Melamin/Formaldehyd-Kondensationsproduktes, wobei die Lösung einen Emulgator, ein saures Härtungsmittel und ein Treibmittel, vorzugsweise einen C₅- bis C₇-Kohlenwasserstoff, enthält. Anschließend wird das Melamin/Formaldehyd-Kondensat bei erhöhter Temperatur ausgehärtet.

Um den Schaumstoff hydrophob und/oder oleophob auszurüsten, wird dieser mit handelsüblichen Imprägniermitteln aus Fluorcarbonharzen oder Silikonharzen behandelt. Hierdurch wird vermieden, dass sich der Schaumstoff mit flüssigem Wasser bzw. Öl voll saugt.

In den Imprägniermitteln liegt das Fluorcarbon- oder Silikonharz vorzugsweise in Form emulgierter Tröpfchen in Wasser oder leicht flüchtigen organischen Lösungsmitteln, z.B. Methanol, Ethanol, Aceton oder Pentan, vor. Aus Gründen der Nichtbrennbarkeit ist Wasser als Emulgiermittel bevorzugt.

Um den Schaumstoff zusätzlich flammfest auszurüsten bzw. seine brandhemmenden Eigenschaften zu verbessern, wird dieser zusätzlich mit mindestens einer brandhemmenden Substanz imprägniert.

Um einen Imprägnierschritt einzusparen wird der Schaumstoff vorzugsweise mit einer Mischung aus dem mindestens einen Flammschutzmittel und dem Fluorcarbonharz und/oder Silikonharz imprägniert.

Als brandhemmende Substanzen werden im Allgemeinen Flammschutzmittel verwendet. Flammschutzmittel sind chemische Verbindungen, die brennbaren Materialien zugesetzt werden, um sie besser gegen Entflammung zu schützen. Durch Flammschutzmittel wird das Risiko der Brandentstehung durch eine Zündquelle geringer Intensität zum Beispiel einer Zigarette, Kerze oder einem elektrischen Defekt, minimiert. Wenn sich das flammgeschützte Material entzündet hat, bremst das Flammschutzmittel den Brennvorgang und verhindert häufig die Ausbreitung des Feuers auf andere Teile.

Die Verzögerung oder Verhinderung des Verbrennungsprozesses durch Flammschutzmittel erfolgt durch chemische oder physikalische Wirkung. Chemisch wirkende Flammschutzmittel unterbrechen im Allgemeinen die Radikalkettenreaktion der Verbrennung in der Gasphase oder bauen eine verkohlte Schicht auf, die das Material gegen Sauerstoff schützt und eine Barriere gegen die Wärmequelle bildet (Intumiszenz).

Die physikalische Wirkung von Flammschutzmitteln tritt insbesondere ein durch Kühlung, indem energieverbrauchende Prozesse, die durch Additive und/oder chemische Abgabe von Wasser ausgelöst werden, das Substrat auf eine Temperatur unterhalb der Temperatur, die zur Aufrechterhaltung des Verbrennungsprozesses notwendig ist, abkühlen. Schließlich kann die physikalische Wirkung auch durch Verdünnung eintreten, wobei inerte Stoffe und Additive, die nicht brennbare Gase abgeben, die Sauerstoffkonzentration in den Brandgasen über dem Schaumstoff soweit abzusenken, dass die Verbrennung unterbrochen wird.

Abhängig vom wirksamen Element werden Flammschutzmittel eingeteilt in Halogenverbindungen (Brom- und Chlorverbindungen), Phosphorverbindungen, Stickstoffverbindungen, intumeszierende Systeme, mineralische Stoffe (auf Basis von Aluminium und Magnesium) sowie Borax, Sb₂O₃ und Nanokomposit. Zur Verbesserung der brandhemmenden Eigenschaften von Kunststoffen werden zum Beispiel Aluminiumtrihydroxid, bromierte Verbindungen, chlorierte Phosphorverbindungen, nicht-halogenierte Phosphorverbindungen, Chlorparafine, Magnesiumdihydroxid, Melamine und Borate eingesetzt. Geeignete, dem Fachmann bekannte Flammschutzmittel sind zum Beispiel in der Broschüre "Flammschutzmittel, häufig gestellte Fragen" der European Flame Retardants Association, Januar 2004, beschrieben.

Erfindungsgemäß eingesetzte brandhemmende Substanzen sind Flammschutzmittel auf Basis von Silikaten, Boraten, Hydroxiden und Phosphaten der Metalle der I. bis III. Hauptgruppe, des Zinks und des Ammoniums. Das Metall der I. bis III. Hauptgruppe ist vorzugsweise Natrium, Kalium, *Calcium,* Magnesium oder Aluminium. Besonders bevorzugt ist die brandhemmende Substanz ausgewählt aus Natriumsilikaten, Kaliumsilikaten, Magnesiumhydroxid, Aluminiumhydroxid, Natriumborat, Kaliumborat, Magnesiumborat, Zinkborat, Ammonium(poly)phosphaten, *Natrium(poly)phosphaten, Kalium(poly)phosphaten, Calcium(poly)phosphaten und Aluminium(poly)phosphaten.*

In einer Ausführungsform ist die Imprägnierung aus einer Mischung, die brandhemmende Substanz und das Fluorcarbonharz oder Silikonharz enthaltend, aufgebaut. Hierzu wird zunächst das, gegebenenfalls als Emulsion mit einem oder mehreren Lösungsmitteln vorliegende, noch nicht ausgehärtete Fluorcarbonharz oder Silikonharz mit der brandhemmenden Substanz gemischt und der Schaumstoff anschließend mit dieser Mischung imprägniert. Zusätzlich kann in der Mischung mindesteins eine Polymerdispersion als Bindemittel enthalten sein. *Der Zusatz eines Bindemittels fixiert die brandhemmende Substanz auf den Zellstegen des Schaumstoffs und verhindert* so *die Staubfreisetzung bei der Weiterverarbeitung des imprägnierten Schaumstoffs nach erfolgter Trocknung. Bevorzugt sind formaldehydfreie Bindemittel, insbesondere wärmehärtende Acrylatbindemittel wie sie z.B. von der Firma BASF unter dem Handelsnamen Acrodur® vertrieben werden. Aufgrund der wärmehärtenden (vemetzenden) Eigenschaften dieser Bindemittel können die flammgeschützten, hydro- und oleophobierten Schaumstoffzuschnitte in einer Formpresse oder einem Tiefziehwerkzeug bleibend verformt werden. Die akustischen Eigenschaften (Schalldämpfung) der offenzelligen Schaumstoffzuschnitte werden durch das Bindemittel, die hydro- und oleophobierenden Komponenten und die brandhemmende Substanz nicht verschlechtert sondern, im Gegenteil, meistens sogar verbessert. Ferner können* so *ausgerüstete Schaumstoffzuschnitte mit luftdurchlässigen Vliesstoffen aus Bauschvliesen oder Baumwollfaservliesen abgedeckt und verpresst werden. Diese Form der Weiterverarbeitung wird insbesondere bei der Herstellung von schallabsorbierenden Formteilen für die Automobilindustrie angewandt. Um ein vorzeitiges Aushärten des Bindemittels zu verhindern, dürfen die Trocknungstemperaturen der Schaumstoffzuschnitte 100 bis 150°C nicht überschrieiten. Das Verpressen bzw. Verprägen zum Formteil in der Formpresse oder einem Tiefziehwerkzeug erfolgt bei 150 bis 240°C, bevorzugt bei 170 bis 230°C.*

*Herkömmliche selbstvemetzende Dispersionen enthalten nur einen geringen Anteil reaktiver Comonomere, in den meisten Fällen sind das die formaldeydabspaltenden Amol- oder Mamol- Monomere. Eine bevorzugte Lösung oder Dispersion wärmehär tender Acrylatbindemittel besteht dagegen zu einem wesentlichen Anteil aus Säure-und Alkoholkomponenten die beim Erhitzen in einer Veresterungsreaktion miteinander vernetzen. Die viel höhere Vernetzungsdichte ist für den duroplastischen Charakter der thermogeformten Schaumstoffbauteile verantwortlich. Bevorzugte Lösungen oder Disposionen wärmehärtender Acrylatbindemittel enthalten keine gesundheitsschädlichen Bestandteile,* so *dass sich auch arbeitshygienische Vorteile gegenüber Bindemittein auf Basis von Epoxiden, Phenolharzen und Hamstoff-Formaldehydharzen ergeben. Dispersionen wärmehärtender Acrylatbindemittel, z.B. Acrodur® Dispersionen als Bindemittel haben darüber hinaus noch weitere Vorteile: Die mit ihnen hergestellten Formteile besitzen eine größere Elastizität und einen partiell hydrophoben Charakter im Vergleich zu Formteilen die mit Lösungen wärmehärtender Acrylatbindemittel, z.B. Acrodur® Lösungen produziert wurden.*

In einer weiteren Ausführungsform erfolgt die Imprägnierung in zwei Stufen. In einer ersten Stufe wird die Schaumstoffmatrix mit den brandhemmenden Substanzen und dem Bindemittel imprägniert. In einem zweiten Schritt wird dann eine Schicht aus Fluorcarbonharz und/oder Silikonharz zur Hydrophobierung / Oleophobierung auf die Zellstege aufgebracht.

In einer bevorzugten Ausführungsform wird der Schaumstoff in einem einzigen Imprägnierschritt mit einer Mischung aus Fluorcarbonharz beziehungsweise Silikonharz, dem Bindemittel und den brandhemmenden Substanzen imprägniert. Das Gemisch enthält im Allgemeinen 1 bis 30 Gew.-% Fluorcarbonharz oder Silikonharz und 10 bis 70 Gew.-% brandhemmender Substanzen. Die übrigen Gewichtsanteile bestehen im Wesentlichen aus Bindemittel und Wasser bzw. leicht flüchtigen organischen Substanzen. Besonders bevorzugt sind Mischungen mit niedrigen Gehalten an Fluorcarbon- bzw. Silikonharzen und hohen Gehalten an brandhemmenden Substanzen um eine hohe Brandschutzwirkung zu erzielen.

Durch die Imprägnierung erhöht sich die Dicht der offenzelligen Schaumstoffe um 10 bis 2000 %. Besonders bevorzugt sind Dichteerhöhungen im Bereich von 100 bis 1000 %. Bei Melaminharz-Schaumstoffen mit einer Rohdichte von ca. 10 g/l sind Dichten des imprägnierten Schaumstoffes im Bereich von 20 bis 100 g/l besonders bevorzugt.

Die Herstellung des erfindungsgemäßen Schaumstoffes, bei welchem die Imprägnierung aus einer Mischung, die brandhemmende Substanz und Fluorcarbonharz oder Silikonharz enthaltend, aufgebaut ist, erfolgt nach einem Verfahren mit folgenden Schritten:
(a) Mischen der mindestens einen brandhemmenden Substanz und des Harzes sowie gegebenenfalls des mindestens einen weiteren *Polymers.*
(b) Auftragen der Mischung auf den Schaumstoff oder Tränken des Schaumstoffes mit der Mischung,
(c) Pressen des Schaumstoffes mit der Mischung, um die Mischung in die Poren des Schaumstoffes einzubringen,
(d) Trocknung des Schaumstoffs,
wobei die Schritte (b) und (c) aufeinander folgend, zuerst Schritt (b), dann Schritt (c), durchgeführt werden.

Das Auftragen der Mischung auf den Schaumstoff und das Pressen des Schaumstoffes können zum Beispiel wie in EP-A 0 451 535 beschrieben, durchgeführt werden. Hierzu wird der Schaumstoff zwischen zwei sich in entgegengesetzter Richtung drehende Walzen hindurchgeführt, wobei der Abstand der Walzen so gewählt ist, dass der Schaumstoff hierbei zusammengepresst wird. Die Mischung, mit der der Schaumstoff imprägniert wird, wird auf die horizontalen nebeneinander liegenden Walzen aufgegeben, so dass sich an der Stelle, an der der Schaumstoff durch die Walzen hindurchbewegt wird, ein Flüssigkeitspool ausbildet. Durch die Rotationsbewegung der Walzen und das Pressen des Schaumstoffes wird die Mischung, die im Flüssigkeitspool enthalten ist, in den Schaumstoff eingepresst. Die Mischung legt sich um die Stege des Schaumstoffes und bildet so nach dem Aushärten eine geschlossene Oberfläche.

Nach dem Aufbringen der Mischung und dem Pressen des Schaumstoffes wird der so imprägnierte Schaumstoff vorzugsweise in einem Trocknungsofen bei einer Temperatur im Bereich von 40 bis 200°C getrocknet.

Um die Dichte des imprägnierten Schaumstoffes weiter zu erhöhen, kann der in einer ersten Stufe imprägnierte Schaumstoff nach dem gleichen Verfahren auch mehrere Male das Verfahren zur Imprägnierung durchlaufen. Hierdurch wird in jedem Schritt die Dicke der die Stege umhüllenden Schicht und damit die Dichte erhöht.

In einer Verfahrensvariante umfasst das Verfahren zur Herstellung eines erfindungsgemäßen Schaumstoffes folgende Schritte:
(a) Auftragen der mindestens einen brandhemmenden Substanz auf den Schaumstoff oder Tränken des Schaumstoffs mit der mindestens einen brandhemmenden Substanz *und anschließendem Pressen oder Foulardieren zur gleichmäßigen Verteilung der brandhemmenden Substanz im Schaumstoff,*
(b) Auftragen des Harzes auf den Schaumstoff oder Tränken des Schaumstoffes mit dem Harz und
(c) Pressen oder *Foulardieren des Schaumstoffes zur gleichmäßigen Verteilung des Harzes in dem mit der mindestens einen brandhemmenden Substanz beladenen Schaumstoff aus Schritt (a).*

Neben dem Auftragen der Substanz, mit der der Schaumstoff imprägniert werden soll und dem anschließenden Pressen ist es ebenso möglich, den Schaumstoff mit der Substanz, mit der dieser imprägniert werden soll, zu tränken und anschließend zu pressen. Zum Tränken wird der Schaumstoff zum Beispiel durch ein Bad, welches die mindestens eine Substanz enthält, mit der der Schaumstoff imprägniert werden soll, gezogen. Es ist jedoch auch jedes weitere, dem Fachmann bekannte Verfahren denkbar, mit dem der Schaumstoff getränkt werden kann.

In einer weiteren Verfahrensvariante ist es möglich, zunächst die brandhemmenden Substanzen und das Bindemittel aufzutragen oder den Schaumstoff mit dieser Mischung zu tränken und anschließend zu pressen. In einem weiteren Imprägnierschritt wird anschließend die Fluorcarbon- bzw. Silikonharzemulsion aufgebracht und der Schaumstoff wiederum gepresst. Nachdem der Schaumstoff in diesem zweistufigen Prozess mit einer Schicht brandhemmender Substanzen und einer Schicht oleophober / hydrophober Substanzen imprägniert ist, wird dieser bei einer Temperatur zwischen 40 und 200°C getrocknet.

Weiterhin ist es möglich, den Schaumstoff zunächst mit den brandhemmenden Substanzen zu imprägnieren und zu pressen und dann den Schaumstoff vor dem Aufbringen der zweiten Schicht aus Fluorcarbon- oder Silikonharzen zu trocknen.

Bei beiden Ausführungsformen erfolgt das Pressen jeweils vorzugsweise wie in EP-A 0 451 535 beschrieben, indem der Schaumstoff durch einen definierten Spalt zwischen zwei gegensinnig rotierenden, parallel ausgerichteten Walzen hindurchgeführt wird.

Neben dem Durchführen des Schaumstoffes durch einen Spalt zwischen zwei gleichsinnig rotierenden Walzen ist es auch möglich, den zum Imprägnieren notwendigen Druck dadurch auszuüben, dass der imprägnierte Schaumstoff auf einem Förderband transportiert wird und eine Walze, die sich mit der gleichen Umfangsgeschwindigkeit dreht, mit der der Schaumstoff bewegt wird, auf den Schaumstoff presst. Weiterhin kann der Druck auf den Schaumstoff dadurch ausgeübt werden, dass der Schaumstoff zum Beispiel in eine Presse eingelegt wird, in welcher ein Stempel auf den Schaumstoff presst. In diesem Fall ist jedoch ein kontinuierliches Pressen nicht möglich.

Auch kann das Pressen durch jede weitere dem Fachmann bekannte Vorrichtung durchgeführt werden.

Das Harz, mit dem der Schaumstoff imprägniert wird, liegt in beiden Ausführungsformen vorzugsweise als Emulsion in einem leichtflüchtigen Lösungsmittel vor. Geeignete Lösungsmittel sind zum Beispiel Wasser oder leichtflüchtige Alkohole wie Methanol oder Ethanol. Besonders bevorzugt liegt das Harz in wässriger Emulsion vor.

*Durch die beschriebene nachträgliche Imprägnierung des offenzelligen Schaumstoffes lassen sich auch Fertigteile herstellen, die in Baustoffklasse A2 nach DIN 4102 eingestuft werden können. Dies ermöglicht neue Anwendungen von thermoakustischen Komponenten in sicherheitsrelevanten Bausektoren in Form von Wand- oder Deckenplatten, die strukturiert und eben ausgeführt sein können, insbesondere letztgenannte auch in Kombination mit nichtbrennbaren Abdeckungen z.B. aus Metall, Gipskarton, Carbonfaser- oder Glasfaservliesen- und -geweben u.a..*

*Nichtbrennbare Kernelemente sind auch für brandsichere Türelemente einsetzbar, insbesondere im Verbund mit Brandschutzplatten oder- Streifen z.B. aus Palusol® der BASF* AG, *die vorzugsweise stoffschlüssig mit einem Kem aus dem erfindungsgemäßen imprägnierten Schaumstoff zusammengefügt sind, wo erforderlich im Verbund mit nicht brennbaren Rahmenkonstruktionen aus vorzusgweise metallischen Werkstoffen oder Holzrahmen.*

*Einen Beitrag zur Erhöhung der Brandsicherheit kann der nach vorstehenden Verfahren imprägnierte Schaumstoff auch als Kemmaterial für Glas- oder Carbonfaservorhänge leisten. Solche Vorhänge mit erhöhter Brandsicherheit dienen vorzugsweise zur Verdunklung von Räumen, die zu Präsentations- oder Vorführzwecken genutzt werden. Mit der Brandklasse A2 nach DIN 4102 können solche Vorhänge auch einen brandtechnischen Sicherheitsbeitrag in öffentlichen Gebäuden leisten, z.B. Krankenhäusern, Theatern, Kinos, Multifunktionsräumen etc..*

*Die Minderung der spezifischen Rauchgastoxizität erhöht die Einsatzvielfalt in Schienenfahrzeugen und im Schiffsbau in Form von thermoakustische Isolierungen von Wänden, Decken, Klima- und Belüftungsanlagen.*

### Beispiele

### 1. Vergleichsbeispiel

Ein nicht imprägnierter Melamin/Formaldehyd-Schaumstoff wird hinsichtlich des Brandverhaltens und des Verhaltens in Gegenwart von flüssigem Wasser untersucht. Die Brandklasse wird nach DIN 4102 bestimmt. Es ergibt sich eine Brandklasse B1. Bei Kontakt mit flüssigem Wasser saugt sich der Schaumstoff voll und taucht unter.

### Beispiel

Ein offenzelliger Melamin/Formaldehyd-Schaumstoff wird mit einem Gemisch aus einer 5 gew.%igen Fluorcarbonharzemulsion und einem 30 gew.-%igen Natriumsilikathaltigen Klebstoff imprägniert und bei 90°C getrocknet. Die Dichteerhöhung nach der Trocknung beträgt 150 %. Der derart imprägnierte Schaumstoff erfüllt die Anforderungen der Brandklasse A 2 nach DIN 4102 und schwimmt auf Wasser.

## Patentansprüche

1. Schaumstoff aus einer Schaumstoffmatrix mit im Wesentlichen offenen Zellen und mit einer auf die Schaumstoffmatrix aufgetragenen Imprägnierung aus im wesentlichen Fluorcarbonharz und/oder Silikonharz, wobei die Imprägnierung zusätzlich mindestens eine brandhemmende Substanz enthält, **dadurch gekennzeichnet, dass** die brandhemmende Substanz ausgewählt ist aus Silikaten, Boraten, Hydroxiden und Phosphaten der Metalle der I. bis III. Hauptgruppe, des Zinks und des Ammoniums .

2. Schaumstoff nach Anspruch 1, **dadurch gekennzeichnet, dass** das Metall der I. bis III. Hauptgruppe Natrium, Kalium, *Calcium,* Magnesium oder Aluminium ist.

3. Schaumstoff nach Anspruch 1 oder 2, **dadurch gekennzeichnet, dass** die brandhemmende Substanz ausgewählt ist aus Natriumsilikaten, Kaliumsilikaten, Magnesiumhydroxid, Aluminiumhydroxid, Natriumborat, Kaliumborat, Magnesiumborat, Zinkborat, Ammonium(poly)phosphaten, Natrium(poly)phosphaten, Kalium(poly)phosphaten, Calcium(poly)phosphaten und Aluminium(poly)phosphaten.

4. Schaumstoff nach einem der Ansprüche 1 bis 3, **dadurch gekennzeichnet, dass** die Imprägnierung aus einer Mischung, die brandhemmende Substanz, das Fluorcarbonharz oder Silikonharz und gegebenenfalls mindestens ein weiteres Polymer enthaltend, aufgebaut ist.

5. Schaumstoff nach einem der Ansprüche 1 bis 3, **dadurch gekennzeichnet, dass** die Imprägnierung aus getrennten Schichten aufgebaut ist, die jeweils das Fluorcarbonharz oder Silikonharz bzw. mindestens ein weiteres Polymer mit der brandhemmenden Substanz enthalten.

6. Schaumstoff nach Anspruch 4, **dadurch gekennzeichnet, dass** das mindestens eine weitere Polymer eine wärmehärtende Acrylatlösung oder -dispersion ist.

7. Schaumstoff nach Anspruch 6, **dadurch gekennzeichnet, dass** der Schaumstoff durch Heißpressen bei einer Temperatur im Bereich von 180 bis 240°C bleibend verformt werden kann.

8. Schaumstoff nach einem der Ansprüche 1 bis 7, **dadurch gekennzeichnet, dass** die Schaumstoffmatrix aus einem Melamin/Formaldehyd-Polykondensat aufgebaut ist.

9. Schaumstoff nach Anspruch 8, **dadurch gekennzeichnet, dass** das Verhältnis von Melamin zu Formaldehyd zur Herstellung der Schaumstoffmatrix 1 : 1,2 bis 1 : 4 beträgt.

10. Schaumstoff nach einem der Ansprüche 1 bis 7, **dadurch gekennzeichnet, dass** die Schaumstoffmatrix ein Harnstoff/Formaldehyd-Schaumstoff ist.

11. Schaumstoff nach einem der Ansprüche 1 bis 7, **dadurch gekennzeichnet, dass** die Schaumstoffmatrix ein offenzelliger Polyurethanschaumstoff ist.

12. Verfahren zur Herstellung eines Schaumstoffes nach Anspruch 4, **gekennzeichnet durch** folgende Schritte:
(a) Mischen der mindestens einen brandhemmenden Substanz und des Harzes sowie gegebenenfalls des mindestens einen weiteren Polymers,
(b) Auftragen der Mischung auf den Schaumstoff oder Tränken des Schaumstoffs mit der Mischung und
(c) Pressen des Schaumstoffes mit der Mischung, um die Mischung in die Poren des Schaumstoffes einzubringen,
(d) Trocknung des Schaumstoffs,
wobei die Schritte (b) und (c) aufeinander folgend, zuerst Schritt (b), dann Schritt (c), durchgeführt werden

13. Verfahren zur Herstellung eines Schaumstoffes nach Anspruch 5, **gekennzeichnet durch** folgende Schritte:
(a) Auftragen der mindestens einen brandhemmenden Substanz auf den Schaumstoff oder Tränken des Schaumstoffs mit der mindestens einen brandhemmenden Substanz *und anschließendes Pressen oder Foulardieren zur gleichmäßigen Verteilung der brandhemmenden Substanz im Schaumstoff,*
(b) Auftragen des Harzes auf den Schaumstoff oder Tränken des Schaumstoffes mit dem Harz und
*(c) Pressen oder Foulardieren des Schaumstoffes zur gleichmäßigen Verteilung des Harzes in dem mit der brandhemmenden Substanz - beladenen Schaumstoff aus Schritt (a)*
*wobei die Schritte (b) und (c) gleichzeitig oder aufeinanderfolgend, zuerst Schritt (b), dann Schritt (c), durchgeführt werden können.*

14. Verfahren nach Anspruch 13, **dadurch gekennzeichnet, dass** zuerst die brandhemmende Substanz und danach das Harz auf den Schaumstoff aufgetragen werden.

15. Verfahren nach Anspruch 14, **dadurch gekennzeichnet, dass** der Schaumstoff mit der darauf aufgetragenen mindestens einen brandhemmenden Substanz zunächst gepresst wird, bevor in einem zweiten Schritt eine weitere Imprägnierung mit Fluorcarbonharz und/oder Silikonharz erfolgt.

16. Verfahren nach einem der Ansprüche 12 bis 15, **dadurch gekennzeichnet, dass** das Harz als Emulsion in einem leichtflüchtigen Lösungsmittel vorliegt.

17. Verwendung des Schaumstoffes nach einem der Ansprüche 1 bis 11 für Bauelemente mit thermoakustischer Wirkung in Bereichen mit besonders hohen Brandschutzanforderungen.

## Claims

1. A foam which comprises a foam matrix having essentially open cells and an impregnation comprising essentially fluorocarbon resin and/or silicone resin applied to the foam matrix, wherein the impregnation additionally comprises at least one flame-retardant substance and the flame-retardant substance is selected from among silicates, borates, hydroxides and phosphates of metals of main groups I to III, of zinc and of ammonium.

2. The foam according to claim 1, wherein the metal of main groups I to III is sodium, potassium, calcium, magnesium or aluminum.

3. The foam according to claim 1 or 2, wherein the flame-retardant substance is selected from among sodium silicates, potassium silicates, magnesium hydroxide, aluminum hydroxide, sodium borate, potassium borate, magnesium borate, zinc borate, ammonium (poly)phosphates, sodium (poly)phosphates, potassium (poly)phosphates, calcium (poly)phosphates and aluminum (poly)phosphates.

4. The foam according to any of claims 1 to 3, wherein the impregnation is made up of a mixture comprising the flame-retardant substance, the fluorocarbon resin or silicone resin and optionally at least one further polymer.

5. The foam according to any of claims 1 to 3, wherein the impregnation is made up of separate layers, namely a layer comprising the fluorocarbon resin or silicone resin and a layer comprising at least one further polymer together with the flame-retardant substance.

6. The foam according to claim 4, wherein the at least one further polymer is a thermally curing acrylate solution or dispersion.

7. The foam according to claim 6, wherein the foam can be permanently shaped by hot pressing at a temperature in the range from 180 to 240°C.

8. The foam according to any of claims 1 to 7, wherein the foam matrix is made up of a melamine-formaldehyde polycondensate.

9. The foam according to claim 8, wherein the ratio of melamine to formaldehyde for producing the foam matrix is from 1 : 1.2 to 1 : 4.

10. The foam according to any of claims 1 to 7, wherein the foam matrix is a urea-formaldehyde foam.

11. The foam according to any of claims 1 to 7, wherein the foam matrix is an open-celled polyurethane foam.

12. A process for producing a foam according to claim 4, which comprises the following steps:
(a) mixing of the at least one flame-retardant substance and the resin and optionally the at least one further binder,
(b) application of the mixture to the foam or soaking of the foam with the mixture and
(c) pressing of the foam together with the mixture in order to introduce the mixture into the pores of the foam,
(d) drying of the foam,
with the steps (b) and (c) being carried out successively, firstly step (b) then step (c).

13. A process for producing a foam according to claim 5, which comprises the following steps:
(a) application of the at least one flame-retardant substance to the foam or soaking of the foam with the at least one flame-retardant substance and subsequent pressing or padding to distribute the flame-retardant substance uniformly in the foam,
(b) application of the resin to the foam or soaking of the foam with the resin and
(c) pressing or padding of the foam to distribute the resin uniformly in the foam laden with the flame-retardant substance from step (a),
with the steps (b) and (c) being able to be carried out simultaneously or successively, firstly step (b) then step (c).

14. The process according to claim 13, wherein the flame-retardant substance is applied first and the resin is then applied to the foam.

15. The process according to claim 14, wherein the foam with the at least one flame-retardant substance applied thereto is firstly pressed before a further impregnation with fluorocarbon resin and/or silicone resin is carried out in a second step.

16. The process according to any of claims 12 to 15, wherein the resin is present as an emulsion in a volatile solvent.

17. The use of the foam according to any of claims 1 to 11 for building elements having a thermoacoustic effect in places having particularly high fire protection requirements.

## Revendications

1. Mousse à base d'une matrice en mousse à cellules essentiellement ouvertes et comportant une imprégnation, appliquée sur la matrice en mousse, à base essentiellement de résine fluorocarbonée et/ou de résine de silicone, l'imprégnation en outre contenant au moins une substance ignifuge, **caractérisée en ce que** la substance ignifuge est choisie parmi les silicates, borates, hydroxydes et phosphates des métaux des groupes IA à IIIA, du zinc et de l'ammonium.

2. Mousse selon la revendication 1, **caractérisée en ce que** le métal du groupe IA à IIIA est le sodium, le potassium, le calcium, le magnésium ou l'aluminium.

3. Mousse selon la revendication 1 ou 2, **caractérisée en ce que** la substance ignifuge est choisie parmi des silicates de sodium, des silicates de potassium, l'hydroxyde de magnésium, l'hydroxyde d'aluminium, le borate de sodium, le borate de potassium, le borate de magnésium, le borate de zinc, les (poly)phosphates d'ammonium, les (poly)phosphates de sodium, les (poly)phosphates de potassium, les (poly)phosphates de calcium et les (poly)phosphates d'aluminium.

4. Mousse selon l'une quelconque des revendications 1 à 3, **caractérisée en ce que** l'imprégnation est effectuée à partir d'un mélange contenant la substance ignifuge, le résine fluorocarbonée ou la résine de silicone et éventuellement au moins un autre polymère.

5. Mousse selon l'une quelconque des revendications 1 à 3, **caractérisée en ce que** l'imprégnation est constituée de couches distinctes qui contiennent chacune la résine fluorocarbonée ou la résine de silicone ou au moins un autre polymère avec la substance ignifuge.

6. Mousse selon la revendication 4, **caractérisée en ce que** ledit au moins un autre polymère est une solution ou dispersion d'acrylate thermodurcissable.

7. Mousse selon la revendication 6, **caractérisée en ce que** la mousse peut être mise en forme permanente par pressage à chaud à une température dans la plage de 180 à 240 °C.

8. Mousse selon l'une quelconque des revendications 1 à 7, **caractérisée en ce que** la matrice en mousse est constituée d'un produit de polycondensation mélamine/formaldéhyde.

9. Mousse selon la revendication 8, **caractérisée en ce que** le rapport de la mélamine au formaldéhyde, pour la production de la matrice en mousse, vaut de 1:1,2 à 1:4.

10. Mousse selon l'une quelconque des revendications 1 à 7, **caractérisée en ce que** la matrice en mousse est une mousse urée/formaldéhyde.

11. Mousse selon l'une quelconque des revendications 1 à 7, **caractérisée en ce que** la matrice en mousse est une mousse de polyuréthanne à cellules ouvertes.

12. Procédé pour la production d'une mousse selon la revendication 4, **caractérisé par** les étapes suivantes :
(a) mélange de ladite au moins une substance ignifuge et de la résine ainsi qu'éventuellement dudit au moins un autre polymère,
(b) application du mélange sur la mousse ou imbibition de la mousse avec le mélange et
(c) pressage de la pousse avec le mélange, afin de faire pénétrer le mélange dans les pores de la mousse ;
(d) séchage de la mousse,
les étapes (b) et (c) étant effectuées successivement, d'abord l'étape (b), puis l'étape (c).

13. Procédé pour la production d'une mousse selon la revendication 5, **caractérisé par** les étapes suivantes :
(a) application de ladite au moins une substance ignifuge sur la mousse ou imbibition de la mousse avec ladite au moins une substance ignifuge et *pressage* ou *foulardage subséquent* pour la répartition *homogène* de la *substance ignifuge dans la mousse,*
(b) application de la résine sur la mousse ou imbibition de la mousse avec la résine et
*(c) pressage* ou *foulardage* de la mousse *pour la répartition homogène de la résine dans la mousse chargée avec la* substance ignifuge, *provenant de l'étape (a)*
*les étapes (b) et (c*) *étant effectuées simultanément ou successivement, d'abord l'étape* (b), puis *l'étape* (c).

14. Procédé selon la revendication 13, **caractérisé en ce qu'**on applique sur la mousse d'abord la substance ignifuge et ensuite la résine.

15. Procédé selon la revendication 14, **caractérisé en ce que** la mousse avec ladite au moins une substance ignifuge appliquée sur celle-ci est d'abord pressée, avant que s'effectue dans une deuxième étape une nouvelle imprégnation avec de la résine fluorocarbonée et/ou de la résine de silicone.

16. Procédé selon l'une quelconque des revendications 12 à 15, **caractérisé en ce que** la résine est présente sous forme d'émulsion dans un solvant volatil.

17. Utilisation de la mousse selon l'une quelconque des revendications 1 à 11, pour des éléments de construction à effet thermo-acoustique dans des domaines à particulièrement hautes exigences d'ignifugation.
